# EUROPEAN PATENT APPLICATION

(11) **EP 4 401 285 A1**
(43) Date of publication of application: **17.07.2024**
(21) Application number: 23204301.8
(22) Date of filing: 18.10.2023
(51) Int. Cl.: H02K 1/16, H02K 21/48, H02K 7/18

(54) **ELECTRICAL ENERGY SYSTEM HAVING DIFFERENT AXIAL LENGTHS FOR EFFICIENT POWER GENERATION**

(30) Priority: 13.01.2023 US 202318154565
(71) Applicant: Rolls-Royce plc, London N1 9FX (GB)
(72) Inventor: TANNER, Mark Angelo, London, N1 9FX (GB)
(74) Representative: HGF

(57) **Abstract**

An example electrical machine configured to generate electrical energy used by two or more components of a gas-turbine engine is described herein. The electrical machine comprises one or more first stator teeth having a first axial length that support first windings configured to generate a first level of the electrical energy used by a first component of the two or more components. The electrical machine also comprises one or more second stator teeth having a second axial length that support second windings configured to generate a second level of the electrical energy used by a second component of the two or more components, the first axial length different than the second axial length.

## Description

### TECHNICAL FIELD

The present disclosure relates to gas-turbine engine systems that are used, in some examples, for powered vehicles, such as aircraft.

### BACKGROUND

A gas-turbine engine is a type of internal combustion engine that may be used to power an aircraft, or another moving vehicle. The turbine in a gas-turbine engine may be coupled to a rotating compressor that increases a pressure of fluid flowing into the turbine. A combustor may add fuel to the compressed fluid and combust the fuel/fluid combination. The combusted fluid may enter the turbine, where it expands, causing a shaft to rotate. The rotating shaft may drive a propulsor, and the propulsor may use the energy from the rotating shaft to provide propulsion for the system.

Gas-turbine engine powered vehicles, such as aircraft, increasingly use electrical systems which may operate to provide auxiliary functions beyond vehicle propulsion. Electrical systems may be used to replace mechanical, hydraulic, and pneumatic drive systems in gas-turbine engine powered vehicles. Gas-turbine engine powered vehicles may include electrical energy generating systems to supply power for the electrical systems.

### SUMMARY

In general, various aspects of the techniques described in this disclosure may enable more efficient operation of electrical machines that generate electrical energy for two or more components of a gas-turbine engine. Rather than include stator teeth of uniform, fixed axial lengths, the electrical machine (e.g., a multi-phase alternating current generator) may include stator teeth having different axial lengths, which are wound with conductors (also having different axial lengths) that produce different electrical energies that are used by the two or more different components having different electrical energy requirements.

For example, an electrical machine in the form of a radial generator may electrically couple to a full authority digital engine controller (FADEC) or another type of engine controller and an ignitor. The FADEC may receive, during startup operations of the gas-turbine engine, a direct current voltage from an external source until the gas-turbine engine is above certain operational thresholds (e.g., 30% of full rotational capacity), at which point the FADEC is powered by the radial generator (which may be mechanically driven, via an accessory gearbox, by a low-pressure spool of the gas-turbine engine). The ignitor may receive electrical energy from the radial generator during various operating conditions of the gas-turbine engine (such as startup, landing, etc.). The ignitor may require relatively high voltage at lower operating speeds to ensure sufficient high heat intensity spark in various operating conditions (e.g., low temperature/high altitude) compared to the FADEC.

A radial generator having uniform, axial length stator teeth may therefore be designed to accommodate windings that produce the relatively higher electrical energy demand of the ignitor, which results in excess electrical energy being delivered to the FADEC. The FADEC may compensate for this excess electrical energy using a power regulator that often results in a power supply that is physically larger (and possibly heavier) than if there was scope to size the windings directly for the FADEC application. The radial generator designed in accordance with various aspects of the techniques described in this disclosure may include stator teeth having different axial lengths with windings that produce different levels of electrical energy for the ignitor and the FADEC.

In this respect, various aspects of the techniques may provide one or more technical improvements that realize one or more practical applications. By enabling different electrical energies via windings of stator teeth having different axial lengths, the radial generator may produce different levels of electrical energy for more efficient use by different components of the gas-turbine engine. As a result, the different electrical components electrically coupled to the radial generator, such as the FADEC, may not need to be sized for the relatively higher electrical energy demand of other electrical components electrically coupled to the radial generator, which may allow the FADEC (in this example) to have a smaller (and possibly lighter) power supply supporting the power converter. Reducing weight (e.g., of the dedicated generator) in vehicles driven by the gas-turbine engine (such as aircraft) may result in more efficient operation of the vehicle (in terms of fuel consumed, operational time - e.g., flight time, etc.).

In one example, various aspects of the techniques are directed to an electrical machine electrically configured to generate electrical energy used by two or more components of a gas-turbine engine, the electrical machine comprising: one or more first stator teeth having a first axial length that support first windings configured to generate a first level of the electrical energy used by a first component of the two or more components; and one or more second stator teeth having a second axial length that support second windings configured to generate a second level of the electrical energy used by a second component of the two or more components, the first axial length different than the second axial length.

In another example, various aspects of the techniques are directed to a method comprising: generating, via first windings around one or more first stator teeth of an electrical machine, a first level of the electrical energy used by a first component electrically coupled to the electrical machine, the one or more first stator teeth having a first axial length; and generating, via second windings around one or more second stator teeth of the electrical machine, a second level of the electrical energy used by a second component electrically coupled to the electrical machine, the one or more second stator teeth having a second axial length different than the first axial length of the one or more first stator teeth.

In one example, various aspects of the techniques are directed to a gas-turbine engine system comprising: a gas turbine engine that includes: a low pressure spool assembly configured to rotate a low pressure shaft; and a high pressure spool assembly mechanically coupled to the low pressure spool assembly; a radial dedicated generator; an assembly gearbox configured to mechanically couple the low pressure shaft to the radial dedicated generator; an engine control system configured to control the gas turbine engine; and an ignition system configured to ignite combustion within the high-pressure spool assembly, wherein the radial dedicated generator comprises: one or more first stator teeth having a first axial length that support first windings configured to generate a first level of the electrical energy used by the engine control system; and one or more second stator teeth having a second axial length that support second windings configured to generate a second level of the electrical energy used by the ignition system, the first axial length different than the second axial length. The details of one or more examples are set forth in the accompanying drawings and the description below. Other features, objects, and advantages will be apparent from the description and drawings, and from the claims.

### BRIEF DESCRIPTION OF THE DRAWINGS

FIG. 1 is a conceptual diagram illustrating an example vehicle in accordance with an example of the present disclosure.
FIGS. 2A-2B are conceptual diagrams illustrating various examples of gas-turbine engine systems in accordance with examples of the present disclosure.
FIG. 3 is a diagram illustrating a radial cross-sectional view of the radial dedicated generator shown in the examples of FIGS. 2A and 2B.
FIGS. 4A and 4B are diagrams illustrating different arrangements of stator teeth of the radial dedicated generator of FIGS. 2A and 2B according to various aspects of the techniques described in this disclosure.
FIG. 5 is a flowchart illustrating example operation of the radial dedicated generator of FIGS. 2A and 2B in accordance with various aspects of the techniques described in this disclosure.

### DETAILED DESCRIPTION

The present disclosure is directed to gas-turbine engine systems, e.g., for gas-turbine engine powered vehicles such an aircraft, and techniques for operating the same. For ease of description, examples of the disclosure will be primarily described in the context of aircraft as a gas-turbine engine powered vehicle. However, examples of the disclosure are not limited to aircraft. For instance, aspects of this disclosure may be applicable to gas-turbine powered ground vehicles, watercraft, and the like.

Aircraft increasingly require significant amounts of additional electrical power. For instance, in bleedless aircraft, various systems traditionally operated using bleed air (e.g., de-icing, cabin pressurization, engine start) may be replaced with electrically operated versions. Those electrical systems may increase the electrical load requirements for the vehicle.

Electrical machines that function as electric generators may be employed by gas-turbine combustion engine power aircraft to satisfy the transient and/or continuous electrical loads associated with the electrical system(s). For example, a gas-turbine engine having a low-pressure spool assembly (e.g., including a low-pressure (LP) compressor and/or propulsor and a low-pressure turbine connected by a low-pressure shaft) and high-pressure (HP) spool assembly (e.g., including a HP pressure compressor and a HP turbine connected by a HP shaft) may include an electric generator that generates electricity from the rotation of the LP spool shaft and/or the HP spool shaft. The electrical power extracted from the LP spool shaft and/or the HP spool shaft may be used to supply power to various aircraft systems (e.g., electrical systems of the vehicle system that require electrical energy to operate, such as aircraft anti-ice heating, weapon systems, navigation systems including radar, environmental cooling systems (ECS), gas-turbine engine control systems, gas-turbine ignition systems, etc.).

Examples of the gas-turbine engine systems may include a high-pressure (HP) spool assembly and at least one other lower pressure (LP) spool assembly (e.g., a low-pressure spool assembly and/or an intermediate pressure spool assembly). The gas-turbine engine may include a generator coupled to the LP shaft of the LP spool assembly so that the generator generates power from the rotation of the LP shaft.

The generator may be a dedicated generator for certain engine systems, such as an engine control system and an ignition system, which provides electrical energy only for these certain engine systems during operation of the gas-turbine engine (e.g., while the LP shaft of the LP spool assembly is rotating). This dedicated generator may be mechanically coupled to the LP shaft via an accessory gearbox such that permanent magnets within the generator are rotated to produce changes in the magnetic flux, and thereby induce electrical current in windings around the stator teeth within the dedicated generator. In a radial dedicated generator, the permanent magnets are disposed radially along a rotor coupled to a rotor shaft (within the radial dedicated generator) that is driven by the LP shaft, and the stator teeth extend axial along the length of radial dedicated generator. The radial dedicated generator may, as a result, produce multi-phase alternating current (AC) voltages via the windings, and may be referred to as a multi-phase AC generator (as well as more generally as a radial permanent magnet generator).

In some examples, the radial dedicated generator may electrically couple to a full authority digital engine controller (FADEC) or another type of engine controller and an ignitor and/or a reference speed winding. The FADEC may receive, during startup operations of the gas-turbine engine, a direct current voltage until the gas-turbine engine is above certain operational thresholds (e.g., 30% of full rotational capacity), at which point the FADEC is powered by the radial generator (which may be mechanically driven, via an accessory gearbox, by a low-pressure spool of the gas-turbine engine). The ignitor and/or reference speed winding may receive electrical energy from the radial dedicated generator during various operating conditions of the gas-turbine engine (such as startup, landing, etc.). The ignitor may require relatively high voltage to ensure sufficient high heat intensity spark in various operating conditions (e.g., low temperature of high altitude) compared to the FADEC.

A radial generator having uniform, axial length stator teeth may therefore be designed to accommodate windings that produce the relatively higher electrical energy demand of the ignitor, which results in excess electrical energy being delivered to the FADEC. The FADEC may compensate for this excess electrical energy using a power regulator that often results in a power supply that is physically larger (and possibly heavier) than if there was scope to size the windings directly for the FADEC application.

In accordance with various aspects of the techniques described in this disclosure, the radial dedicated generator may more efficiently generate electrical energy for two or more components of a gas-turbine engine (e.g., the engine control system and the ignition system). Rather than include stator teeth of uniform, fixed axial lengths, the radical dedicated generator may include stator teeth having different axial lengths that accommodate windings that produce different electrical energies that are used by the two or more different components having different electrical energy requirements. In the above example, the radial dedicated generator may include stator teeth having different axial lengths with windings that produce different levels of electrical energy for the ignitor (or reference speed winding) and the FADEC.

In this respect, various aspects of the techniques may provide one or more technical improvements that realize one or more practical applications. By enabling different electrical energies via windings of stator teeth having different axial lengths, the radial generator may produce different levels of electrical energy for more efficient use by different components of the gas-turbine engine. As a result, the different electrical components electrically coupled to the radial generator, such as the FADEC, may not need to be sized for the relatively higher electrical energy demand of other electrical components electrically coupled to the radial generator, which may allow the FADEC (in this example) to have a smaller (and possibly lighter) power supply supporting the power converter. Reducing weight in vehicles driving by the gas-turbine engine (such as aircraft) may result in more efficient operation of the vehicle (in terms of fuel consumed, operational time - e.g., flight time, etc.).

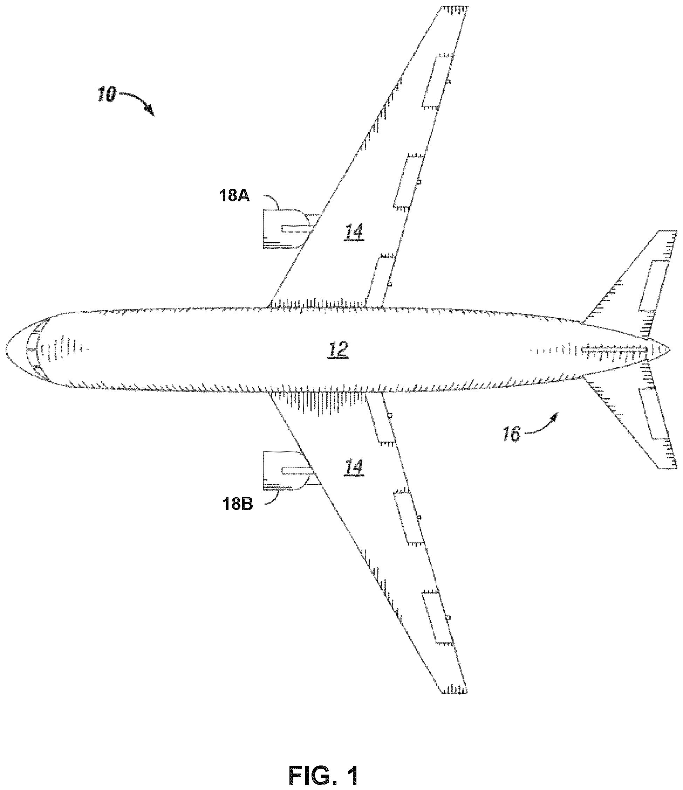

FIG. 1 is a conceptual diagram illustrating an example vehicle in accordance with an example of the present disclosure. In the example of FIG. 1, the vehicle includes an aircraft 10. In other examples, the vehicle may include any type of gas-turbine engine-powered vehicle, including one or more types of air vehicles; land vehicles, including but not limited to, tracked and/or wheeled vehicles; marine vehicles, including but not limited to surface vessels, submarines, and/or semi-submersibles; amphibious vehicles; or any combination of one or more types of air, land, and marine vehicles. The vehicle may be manned, semiautonomous, or autonomous.

Aircraft 10 includes a fuselage 12, wings 14, an empennage 16, two gas-turbine engine systems 18A and 18B (collectively, "gas-turbine engines 18") as main propulsion engines. In other examples, aircraft 10 may include a single gas-turbine engine 18 or more than two propulsion systems 18. As illustrated in FIG. 1, aircraft 10 is a twin-engine turbofan aircraft. In some examples, aircraft 10 may be any fixed-wing aircraft, including turbofan aircraft, turbojet aircraft, and turboprop aircraft. In some examples, aircraft 10 may be a rotary-wing aircraft or a combination rotary-wing/ fixed-wing aircraft (e.g., vertical takeoff and landing - VTOL, short takeoff and landing - STOL, etc.). Aircraft 10 may employ any number of wings 14. Empennage 16 may employ a single or multiple flight control surfaces. Gas-turbine engines 18 may be the main propulsion systems of aircraft 10. Aircraft may also have more than two engines such as three or four engines or may have a single engine.

In accordance with some examples of the disclosure, one or both of gas-turbine engine systems 18A and 18B may include an HP spool, one or more lower pressure (LP) spools (e.g., a single low-pressure spool or a low-pressure spool and one or more intermediate pressure (IP) spools), and a generator coupled (e.g., mechanically coupled via an accessory gearbox) to a rotating shaft of a lower pressure (LP) spool. The systems may be configured such that the generator generates power from the rotation of the LP shaft.

The generator may be a dedicated generator for certain engine systems, such as an engine control system (including a full authority digital engine controller - FADEC) and an ignition system (including an ignitor), which provides electrical energy only for these certain engine systems during operation of the gas-turbine engine (e.g., while the LP shaft of the LP spool assembly is rotating). This dedicated generator may be mechanically coupled to the LP shaft via an accessory gearbox such that permanent magnets within the generator are rotated to produce changes in the magnetic flux, and thereby induce electrical current in windings around the stator teeth within the dedicated generator. In a radial dedicated generator, the permanent magnets are disposed radially along a rotor coupled to a rotor shaft (within the radial dedicated generator) that is driven by the LP shaft of the gas-turbine engine, and the stator teeth extend axial along the length of radial dedicated generator. The radial dedicated generator may, as a result, produce multi-phase alternating current (AC) voltages via the windings, and may be referred to as a multi-phase AC generator (as well as more generally as a radial permanent magnet generator).

In some examples, the radial dedicated generator may electrically couple to the full authority digital engine controller (FADEC) or another type of engine controller and the ignitor (or reference speed winding). The FADEC may receive, during startup operations of the gas-turbine engine, a direct current voltage until the gas-turbine engine is above certain operational thresholds (e.g., 30% of full rotational capacity), at which point the FADEC is powered by the radial generator (which again may be mechanically driven, via the accessory gearbox, by the LP spool of the gas-turbine engine). The ignitor may receive electrical energy from the radial dedicated generator during various operating conditions of the gas-turbine engine (such as startup, landing, etc.). The ignitor may require relatively high voltage (compared to the FADEC) to ensure sufficient high heat intensity spark in various operating conditions (e.g., low temperature of high altitude).

A radial generator having uniform, axial length stator teeth may therefore be designed to accommodate windings that produce the relatively higher electrical energy demand of the ignitor, which results in excess electrical energy being delivered to the FADEC. The FADEC may compensate for this excess electrical energy using a power regulator that often results in a power supply that is physically larger (and possibly heavier) than if there was scope to size the windings directly for the FADEC application.

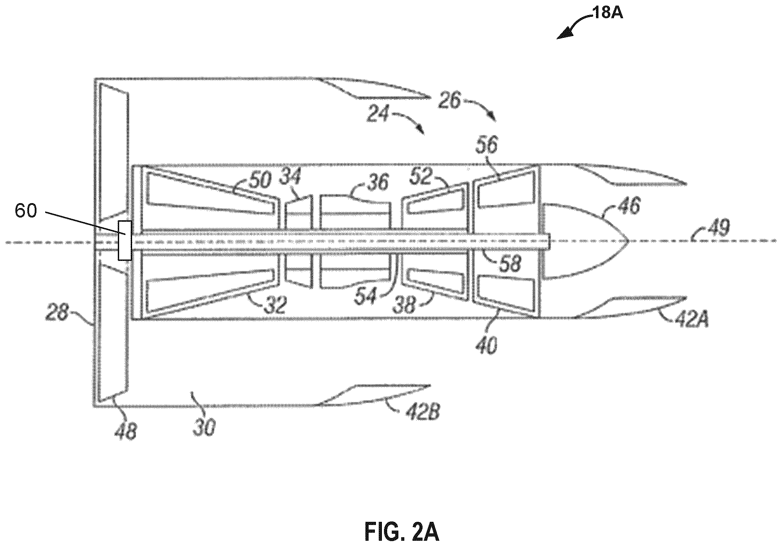

FIG. 2A is a conceptual and schematic diagram illustrating gas-turbine engine system 18A in accordance with an example of the present disclosure. Although described herein as with respect to an aircraft propulsion system, in other examples, gas-turbine engine 18A may be a propulsion system for providing propulsive thrust to any type of gas-turbine engine powered vehicle, as discussed above, or configured to provide power any suitable nonvehicle system including gas-turbine engine 18A. Engine 18B may be the same or similar to engine 18A in FIG. 1.

Engine 18A may be a primary propulsion engine that provides thrust for flight operations of aircraft 10. In the example of FIG. 2A, engine 18A is a two-spool engine having a high-pressure (HP) spool (rotor) 24 and a low-pressure spool (rotor) 26. In other embodiments, engine 18A may include three or more spools, e.g., may include an intermediate pressure (IP) spool and/or other spools and/or partial spools, e.g., on-axis or off-axis compressor and/or turbine stages (i.e., stages that rotate about an axis that is the same or different than that of the primary spool(s)). In one form, engine 18A is a turbofan engine. In other instances, engine 18A may be any other type of gas-turbine engine, such as a turboprop engine, a turboshaft engine, a propfan engine, a turbojet engine or a hybrid or combined cycle engine. As a turbofan engine, low-pressure spool 26 is operative to drive a propulsor 28 in the form of a fan, which may be referred to as a fan system. As a turboprop engine, low-pressure spool 26 powers a propulsor 28 in the form of a propeller system (not shown), e.g., via a reduction gearbox (not shown). In other embodiments, propulsor 28 may take other forms, such as one or more helicopter rotors or tilt-wing aircraft rotors, for example, powered by one or more engines 18A in the form of one or more turboshaft engines.

In some examples, engine 18A includes, in addition to propulsor 28, a bypass duct 30, a high-pressure (HP) compressor 32, a diffuser 34, a combustor 36, a high-pressure (HP) turbine 38, a low-pressure turbine 40, a nozzle 42A, a nozzle 42B, and a tailcone 46, which are generally disposed about and/or rotate about an engine centerline 49. In other embodiments, there may be, for example, an IP spool having an intermediate pressure turbine or other turbomachinery components, such as those mentioned above. In some examples, engine centerline 49 is the axis of rotation of propulsor 28, HP compressor 32, HP turbine 38 and turbine 40. In other embodiments, one or more of propulsor 28, HP compressor 32, HP turbine 38 and turbine 40 may rotate about a different axis of rotation.

In the depicted example, engine 18A core flow is discharged through nozzle 42A, and the bypass flow from propulsor 28 is discharged through nozzle 42B. In other embodiments, other nozzle arrangements may be employed, e.g., a common nozzle for core and bypass flow; a nozzle for core flow, but no nozzle for bypass flow; or another nozzle arrangement. Bypass duct 30 and HP compressor 32 are in fluid communication with propulsor 28. Nozzle 42B is in fluid communication with bypass duct 30. Diffuser 34 is in fluid communication with HP compressor 32. Combustor 36 is fluidly disposed between HP compressor 32 and HP turbine 38. Turbine 40 is fluidly disposed between HP turbine 38 and nozzle 42A. In one form, combustor 36 includes a combustion liner (not shown) that contains a continuous combustion process. In other embodiments, combustor 36 may take other forms, and may be, for example, a wave rotor combustion system, a rotary valve combustion system, a pulse detonation combustion system, a continuous detonation combustion system and/or a slinger combustion system, and may employ deflagration and/or detonation combustion processes.

Propulsor 28 may include a fan rotor system 48 driven by low-pressure spool 26. In various examples, fan rotor system 48 may include one or more rotors that are powered by turbine 40. In various embodiments, propulsor 28 may include one or more fan vane stages (not shown in FIG. 2A) that cooperate with fan blades (not shown) of fan rotor system 48 to compress air and to generate a thrust-producing flow. Bypass duct 30 is operative to transmit a bypass flow generated by propulsor 28 around the core of engine 18A. HP compressor 32 includes a compressor rotor system 50. In various examples, compressor rotor system 50 includes one or more rotors (not shown) that are powered by HP turbine 38. HP compressor 32 also includes a plurality of compressor vane stages (not shown in FIG. 2A) that cooperate with compressor blades (not shown) of compressor rotor system 50 to compress air. In various embodiments, the compressor vane stages may include a compressor discharge vane stage and/or one or more diffuser vane stages. In one form, the compressor vane stages are stationary. In other embodiments, one or more vane stages may be replaced with one or more counter-rotating blade stages.

HP turbine 38 includes a turbine rotor system 52. In various embodiments, turbine rotor system 52 includes one or more rotors having turbine blades (not shown) operative to extract power from the hot gases flowing through HP turbine 38 (not shown), to drive compressor rotor system 50. HP turbine 38 also includes a plurality of turbine vane stages (not shown) that cooperate with the turbine blades of turbine rotor system 52 to extract power from the hot gases discharged by combustor 36. In one form, the turbine vane stages are stationary. In other embodiments, one or more vane stages may be replaced with one or more counter-rotating blade stages. Turbine rotor system 52 is drivingly coupled to compressor rotor system 50 via a shafting system 54 (also referred to as high-pressure (HP) shaft 54). Turbine 40 includes a turbine rotor system 56. In various embodiments, turbine rotor system 56 includes one or more rotors having turbine blades (not shown) operative to drive fan rotor system 48. Turbine 40 may also include a plurality of turbine vane stages (not shown in FIG. 2A) that cooperate with the turbine blades of turbine rotor system 56 to extract power from the hot gases discharged by HP turbine 38. In one form, the turbine vane stages are stationary. In other embodiments, one or more vane stages may be replaced with one or more counter-rotating blade stages. Turbine rotor system 56 is drivingly coupled to fan rotor system 48 via shafting system 58 (also referred to as low-pressure shaft 58).

In various examples, shafting systems 54 and 58 include a plurality of shafts that may rotate at the same or different speeds and directions for driving fan rotor system 48 rotor(s) and compressor rotor system 50 rotor(s). For ease of description, shafting system 54 of HP spool 24 is described primarily as HP shaft 54 but is it recognized that system 54 is not limited to a single shaft. Likewise, shafting system 58 of low-pressure spool 26 is described primarily as low-pressure shaft 58 but is it recognized that system 58 is not limited to a single shaft. Turbine 40 is operative to discharge the engine 18A core flow to nozzle 42A.

During normal operation of gas-turbine engine 18A, air is drawn into the inlet of propulsor 28 and pressurized. Some of the air pressurized by propulsor 28 is directed into HP compressor 32 as core flow, and some of the pressurized air is directed into bypass duct 30 as bypass flow. HP compressor 32 further pressurizes the portion of the air received therein from propulsor 28, which is then discharged into diffuser 34. Diffuser 34 reduces the velocity of the pressurized air, and directs the diffused core airflow into combustor 36. Fuel is mixed with the pressurized air in combustor 36, which is then combusted via an ignitor. The hot gases exiting combustor 36 are directed into turbines 38 and 40, which extract energy in the form of mechanical shaft power to drive HP compressor 32 and propulsor 28 via respective HP shaft 54 and low-pressure shaft 58. The hot gases exiting turbine 40 are discharged through nozzle system 42A, and provide a component of the thrust output by engine 18A.

As shown in FIG. 2A, engine 18A includes generator 60. In the illustrated example, generator 60 is positioned between fan system 48 and HP compressor 32 along centerline 49. Generator 60 may include any suitable type and/or arrangement of an electrical machine such as an electro-mechanical generator that operates in the manner described herein, e.g., by generating power from the rotation of low-pressure shaft 58, with the amount of power being generated being adjusted in some circumstances based on the operation of engine 18A. For example, the amount of power being generated by generator 60 may be increased in combination with a decrease in thrust by engine 18A, e.g., to temporarily increase the torque applied on low-pressure shaft 58 when the thrust generated by engine 18A is initially reduced.

In some examples, generator 60 may be positioned in front of the nose cone or spinner of engine 18A. In other examples, rather than being embedded and positioned coaxially with low-pressure shaft 58, generator 60 may be mounted on an externally mounted gearbox (e.g., an accessory gearbox) which is powered by a shaft driven from the LP rotor (or by either LP rotor or IP rotor in a three-spool engine).

In some examples, generator 60 may be an electrical machine that is configured to be selectively operated as an electric generator or an electric motor. Example of suitable motor-generators 60 may include one or more of the examples of the motor-generator and motor generator assemblies disclosed within U.S. Patent Application Nos. 15/590,623; 15/590,606; 15/590,581; and 15/590,554, filed May 9, 2017 and the example electrical machines describes in U.S. Patent Application No. 15/135,167 filed December 19, 2013, where the entire content of these applications are incorporated by reference herein. In some examples, generator 60 may be selectively operated to extract and/or provide power to the low-pressure shaft 58. For example, generator 60 may be configured for selective operation between a generation mode to generate electrical power from rotation of the low-pressure turbine 40 and in a drive or motor mode to receive electrical power for applying rotational force to the low-pressure shaft 58. In some examples, generator 60 may be a permanent magnet alternator. However, in some examples of the disclosure, generator 60 is an electrical machine that operates in a generator mode but not a motor mode.

In the example of FIG. 2A as well as the other examples turbine engine systems described herein, generator 60 may be an embedded electrical machine in that the stator and rotor of electrical machine core are positioned coaxially with low-pressure shaft 58. The stator of generator 60 may be fixed against rotation relative to the low-pressure shaft 58 and a rotor may be coupled to the low-pressure shaft 58 for rotation therewith. The rotor may be attached to a mount of the low-pressure shaft 58 positioned axially between shaft bearings of the low-pressure shaft 58. The stator may include a number of stator windings positioned radially outward of the rotor, such that each stator winding is arranged in electromagnetic communication with the rotor 44. In other examples, generator 60 may include a stator and rotor positioned non-coaxially, e.g., where the rotor of generator 60 is rotationally coupled to low-pressure shaft 58 via one or more other shafts and suitable gearing.

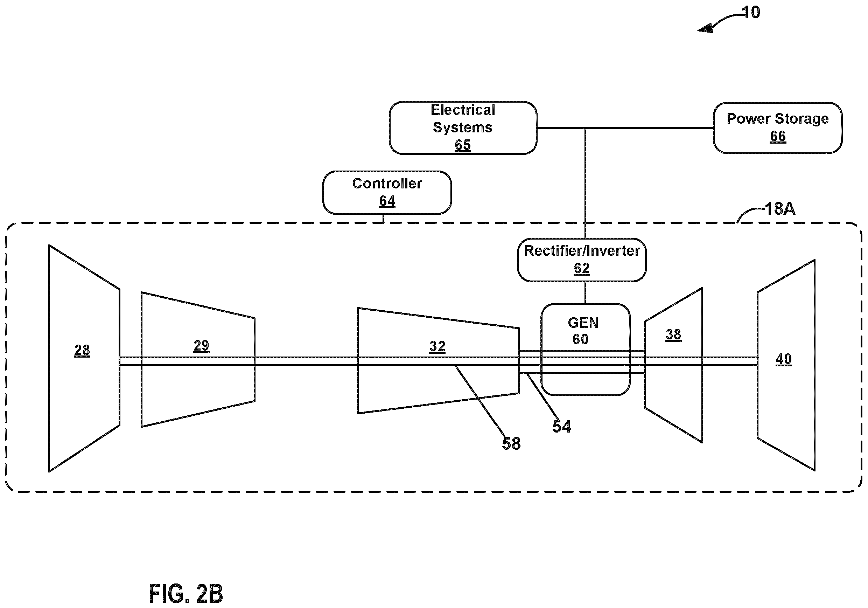

FIG. 2B is another example of a schematic functional diagram illustrating an additional configuration and components of engine system 18A of FIGS. 1 and 2A, and like features are similarly numbered. As noted above, engine system 18A may be a gas turbofan system. Engine 18A may include propulsor rotor system 28 that is rotationally coupled to low-pressure turbine 40 by low-pressure shaft 58, and HP compressor 32 rotationally coupled to HP turbine 38 by HP shaft 54. The speed of HP shaft 54 driving the HP compressor 32 may be different from that of the speed of shaft 58 driving the propulsor rotor system 28. The combination of HP compressor 32, HP turbine 38 and HP shaft 54 may be referred to as the HP spool assembly 24 or HP spool 24.

Engine 18A of FIG. 2B includes low-pressure compressor 29. Low-pressure compressor 29 is coupled to rotationally coupled to low-pressure turbine 40 by low-pressure shaft 58. In some examples, low-pressure compressor 29 may be referred to as a booster. In some examples, low-pressure compressor 29 may be similar to that of HP compressor 32 and may include a compressor rotor system (not shown in detail in FIG. 2B). In various examples, the compressor rotor system includes one or more rotors (not shown) that are powered by low-pressure turbine 40. Low-pressure compressor 29 may also include a plurality of compressor vane stages (not shown in FIG. 2B) that cooperate with compressor blades (not shown) of the compressor rotor system to compress air. In various embodiments, the compressor vane stages may include a compressor discharge vane stage and/or one or more diffuser vane stages. In one form, the compressor vane stages are stationary. In other embodiments, one or more vane stages may be replaced with one or more counter-rotating blade stages. In operation, low-pressure compressor 29 may operate to increase the pressure of the intake air, which is then further increase in pressure by HP compressor 32.

The combination of propulsor system 28, low-pressure compressor 29, low-pressure turbine 40 and low-pressure shaft 58 may be referred to as the low-pressure spool assembly 26 or low-pressure spool 26. In some examples, as shown in FIG. 2B, engine 18A of FIG. 2B may include generator 60, which is operably coupled to one or more of HP shaft 54 or LP shaft 58, e.g., in an embedded (co-axial) with HP shaft 54 and/or LP shaft 58 or non-co-axial.

Engine system 18A may also include a rectifier/inverter 62. In some examples, electrical systems 65 and power storage device 66 may be part of the aircraft system 10. In some examples, system 10 may also include controller 64 (which may represent an example of the FADEC or other engine controller). In some examples, controller 64 may include control circuitry for the control of the engine systems and may control the rectifier 62. In some examples, controller 64 may include one or a combination of controllers as part of a control system that controls the operation of engine 18A and/or other components of system 10. For example, controller 64 may represent more than one controller, wherein the more than one controller includes one or more electronic engine controllers. The electronic engine controllers may be part of the engine but may be physically located on the aircraft. In some examples, one of the individual controllers of controller 64 may control the electrical loads and battery in aircraft 10 as part of system 10. As illustrated, all or a portion of controller 64 may be located on aircraft 10. However, there may be some configuration where an engine controller may be mounted on engine 18A.

In some examples, electrical system 65 and power storage system 66, which are devices that can absorb relatively large amounts of power, use power supplied by generator 60. As described herein, the amount of electrical load applied by electrical system 65 and/or power storage system 66 on generator 60 may be varied to vary the amount of torque load applied by generator 60 on low-pressure shaft 58, e.g., to decrease the rotational speed of low-pressure shaft 58 over a shorter period of time in combination with the reduction in thrust by engine 18A. The generator output voltage may be controlled by rectifier 62 that may control the power input to power storage 66 on a DC bus. If rectifier 62 is powering a DC bus with multiple power sources (not shown) then it may also control the generator power to electrical system 65.

Controller 64 may be configured to control the components of engine 18A and/or aircraft 10 individually and selectively such that engine 18A and system 10 more generally implement the techniques described herein. Controller 64 may comprise any suitable arrangement of hardware, software, firmware, or any combination thereof, to perform the techniques attributed to controller 64 herein. Examples of controller 64 include any of one or more microprocessors, digital signal processors (DSPs), application specific integrated circuits (ASICs), field programmable gate arrays (FPGAs), processing circuitry, or any other equivalent integrated or discrete logic circuitry, as well as any combinations of such components. When controller 64 includes software or firmware, controller 64 further includes any necessary hardware for storing and executing the software or firmware, such as one or more processors or processing units. In some examples, all or portions of controller 64 may be embodied in a full authority digital engine control (FADEC) including an electronic engine controller (EEC) or engine control unit (ECU) and related accessories that control one or more aspects of the operation of engine system 18A.

In general, a processing unit may include one or more microprocessors, DSPs, ASICs, FPGAs, or any other equivalent integrated or discrete logic circuitry, as well as any combinations of such components. Although not shown in FIG. 2B, controller 64 may include a memory configured to store data. The memory may include any volatile or non-volatile media, such as a random access memory (RAM), read only memory (ROM), non-volatile RAM (NVRAM), electrically erasable programmable ROM (EEPROM), flash memory, and the like. In some examples, the memory may be external to controller 64 (e.g., may be external to a package in which controller 64 is housed).

Although controller 64 is generally described as being the primary unit for controlling each of the engine components of engine system 18A for performing the techniques described herein, in some examples, the individual components of engine system 18A may include additional functionality for performing some or all the operations described below with respect to controller 64. For example, a combination of one or more of HP compressor 32, turbines 38, 40, propulsor 28, low-pressure compressor 29, generator 60, rectifier/inverter 62, and the like may include components for controlling the operation of engine system 18A in the manner described herein. As described herein, generator 60, is configured to generate power from the rotation of shaft 58, e.g., as driven by turbine 40. The electrical energy generated by generator 60 in a generator mode may be used to provide operational power to one or more electrically operated systems 65 of vehicle 10 (FIG. 1). In some examples, generator 60 may be configured to generate continuous aircraft or transient system power also defined by the desired end user application. Example electrical systems 65 that may be powered by generator 60 include hydraulic and/or pneumatic drive systems, environmental control systems, communications systems, directed energy systems, radar systems and component cooling systems. Electrical systems 65 may be any system having electrical components requiring power to operate. When operation power is supplied by a generator such as generator 60, electrical system 65 may apply an electrical load on the generator in order for electrical system 65 to operate in the desired manner.

Additionally, or alternatively, all or some of the power generated by generator 60 may be stored by power storage device 66. In such an example, rectifier/inverter 62, under the control of controller 64 may increase its output voltage to input all or a portion of the power generated by generator 60 as direct current to power storage device 66 for storage of the power. Power storage device 66 may be any suitable device such as one or more suitable batteries or capacitors. Engine 18A may utilize the power stored in power storage device at times when the power generated by generator 60 is relatively low. Power storage device 66 may apply (e.g., selectively) an electrical load on generator 60 to recharge the power storage device (e.g., battery). The electrical load applied by power storage device 66 on generator 60 may increase the torque on LP shaft 58.

In some examples, an engine system may include two generators, one generator operatively coupled to the HP rotor/HP shaft 54 and the other generator to the lower-pressure rotor/shaft 58.

Electrical systems 65 may represent any system coupled to generator 60 via rectifier 62, such as aircraft anti-ice heating, weapon systems, navigation systems including radar, environmental cooling systems (ECS), gas-turbine engine control systems (which may include controller 64), gas-turbine ignition systems, etc. In the example of FIG. 2B, electrical systems 65 is assumed to represent a gas-turbine ignition system that includes an ignitor that facilitates combustion in a HP stage of gas turbine engine 18A. As such, electrical systems 65 may be referred to as ignition system 65 or ignitor 65.

As noted above, generator 60 may be a dedicated generator for certain engine systems, such as an engine control system (including a full authority digital engine controller - FADEC) represented by controller 64 and an ignition system (including an ignitor) represented as ignitor 65, which provides electrical energy only for these certain engine systems during operation of the gas-turbine engine (e.g., while the LP shaft of the LP spool assembly is rotating). Dedicated generator 60 (which is another way to refer to generator 60) may be mechanically coupled to the LP shaft via an accessory gearbox such that permanent magnets within generator 60 are rotated to produce changes in the magnetic flux, and thereby induce electrical current in windings around the stator teeth within dedicated generator 60.

In some instances, dedicated generator 60 may further represent a radial dedicated generator and as such may be referred to as radial dedicated generator 60 or dedicated radial generator 60. In radial dedicated generator 60, the permanent magnets are disposed radially along a rotor coupled within the radial dedicated generator) that is driven by LP shaft 58 of gas-turbine engine 18A, and the stator teeth extend axial along the length of radial dedicated generator 60. Radial dedicated generator 60 may, as a result, produce multi-phase alternating current (AC) voltages via the windings, and may be referred to as a multi-phase AC generator 60 (as well as more generally as a radial permanent magnet generator 60).

In some examples, radial dedicated generator 60 may electrically couple to full authority digital engine controller (FADEC) or another type of engine controller (represented as controller 64) and ignitor 65. Controller 64 may receive, during startup operations of the gas-turbine engine, a direct current voltage (e.g., via power storage 66) until gas-turbine engine 18A is above certain operational thresholds (e.g., 30% of full rotational capacity), at which point controller 64 is powered by radial dedicated generator 60 (which again may be mechanically driven, via the accessory gearbox, by the LP spool of the gas-turbine engine). Ignitor 65 may receive electrical energy from the radial dedicated generator during various operating conditions of gas-turbine engine 18A (such as startup, landing, etc.). Ignitor 65 may require relatively high voltage (compared to controller 64) to ensure sufficient high heat intensity spark in various operating conditions (e.g., low temperature of high altitude).

A radial generator having uniform, axial length stator teeth may therefore be designed to accommodate windings that produce the relatively higher electrical energy demand of ignitor 65, which results in excess electrical energy being delivered to controller 64. Controller 64 may compensate for this excess electrical energy using a power regulator that often results in a power supply that is physically larger (and possibly heavier) than if there was scope to size the windings directly for the FADEC application.

Alternatively, the radial dedicated generator may include speed reference windings. When the radial dedicated generator is sized for FADEC windings, the power from the speed reference winding may be much greater than required. To counteract the excess power, the radial dedicated generator may provide multiple stator teeth to increase the inductance of the output without a potentially prohibitively large back electromagnetic field (EMF). That is, one stator tooth may be wound in one direction and then a subsequent tooth may be wound in the other direction possibly with a different number of turns to allow a high inductance but small back EMF.

In accordance with various aspects of the techniques described in this disclosure, radial dedicated generator 60 may more efficiently generate electrical energy for two or more components of gas-turbine engine 18A (e.g., controller 64 and ignitor 65). Rather than include stator teeth of uniform, fixed axial lengths, radial dedicated generator 60 may include stator teeth having different axial lengths that accommodate windings that produce different electrical energies that are used by the two or more different components having different electrical energy requirements. In the above example, radial dedicated generator 60 may include stator teeth having different axial lengths with windings that produce different levels of electrical energy for controller 64 and ignitor 65.

In operation, radial dedicated generator 60 may represent an electrical machine electrically configured to generate electrical energy used by two or more components of gas-turbine engine 18A, such as controller 64 and ignitor 65. Radial dedicated generator 60 may include one or more rotors in which magnets are disposed along an outside radial edge of the rotor. Dedicated generator 60 is radial in that magnetic flux flows radially rather than axially. In axial generators the magnets are disposed on a face of the rotor as opposed to the outside radial edge of the rotor and magnetic flux flows axially.

Radial dedicated generator 60 includes one or more first stator teeth having a first axial length that support first windings configured to generate a first level of the electrical energy used by a first component (e.g., controller 64) of the two or more components. The first windings may include conductors (e.g., copper wires) forming coils that are wrapped or, in other words, wound around the first stator teeth. The first stator teeth are coupled to a body of radial dedicated generator 60 via respective yokes (which may also be referred to as back-irons). The yokes may extend an entire length of the body of radial dedicated generator 60 regardless of whether the first stator teeth extend the entire length of the body of radial dedicated generator 60 or span only a portion (meaning less than the entire length) of the body of radial dedicated generator 60. The yokes may extend an entire length of the body of radial dedicated generator 60 to preserve structural rigidity and/or maintain thermal conduction pathways.

Radial dedicated generator 60 may also include one or more second stator teeth having a second axial length that support second windings configured to generate a second level of the electrical energy used by a second component (e.g., ignitor 65) of the two or more components. The first axial length may be different than the second axial length, which results in the first and second windings producing different levels of electrical energy. For example, the first level of electrical energy is less than the second level of electrical energy when the first axial length of the first stator teeth is less than the second axial length of the second stator teeth. While the above example assumes the first axial length is less than the second axial length, the first axial length may be greater than the second axial length.

Radial dedicated generator 60 may, when actively operating, generate, via the first windings around the first stator teeth, the first level of the electrical energy used by controller 64 electrically coupled to radial dedicated generator 60. Radial dedicated generator 60 may, when actively operating, generate, via the second windings around the second stator teeth, the second level of the electrical energy used by ignitor 65 electrically coupled to radial dedicated generator 60. By reducing the axial length of one or more of the wound stator teeth of these outputs, closer power matching to the requirements may be achieved.

In this respect, various aspects of the techniques may provide one or more technical improvements that realize one or more practical applications. By enabling different electrical energies via windings of stator teeth having different axial lengths, radial dedicated generator 60 may produce different levels of electrical energy for more efficient use by different components (e.g., controller 64 and ignitor 65) of gas-turbine engine 18A.

As a result, the different electrical components electrically coupled to radial dedicated generator 60 may not need to be sized for the relatively higher electrical energy demand of other electrical components electrically coupled to radial dedicated generator 60, which may allow controller 64 to have a smaller (and possibly lighter) power supply supporting the power converter. Further, radial dedicated generator 60 may have reduced weight in that various of the stator teeth do not span the entire length of the body of radial dedicated generator 60. Reducing weight in vehicles driving by gas-turbine engine 18A (such as aircraft) may result in more efficient operation of the vehicle (in terms of fuel consumed, operational time - e.g., flight time, etc.).

Another potential advantage provided by various aspects of the techniques is that the number of stator teeth may be reduced (e.g., by avoiding the speed reference winding needing multiple teeth/slots as noted above) by either the sizing of the electrical output of the non-sized electrical output. As a result of reducing the number of stator teeth, radial dedicated generator 60 may provide a greater number of slot/pole combinations, which may lead to a reduction in production cost or an increase in power density.

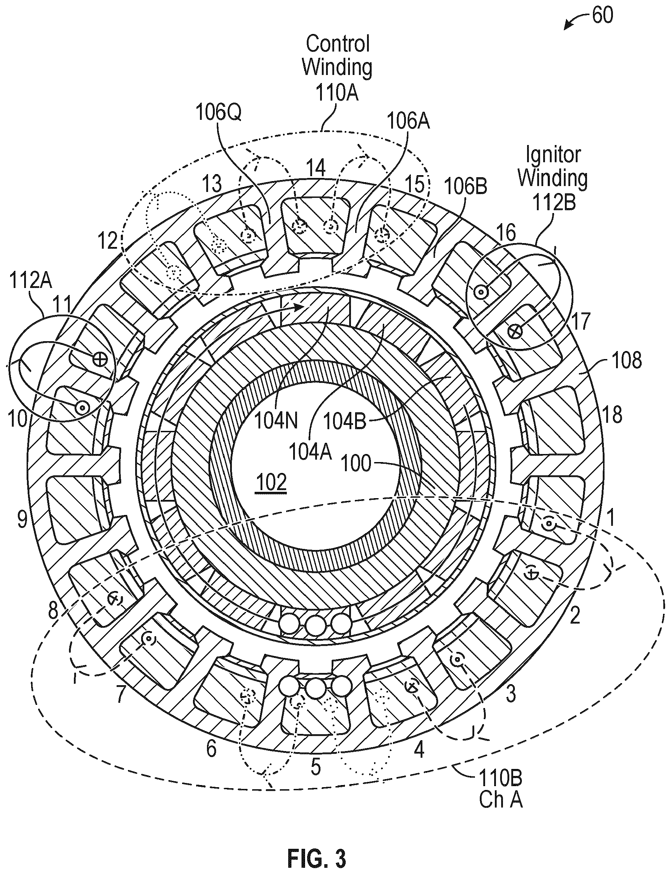

FIG. 3 is a diagram illustrating a radial cross-sectional view of the radial dedicated generator shown in the examples of FIGS. 2A and 2B. In the example of FIG. 3, radial dedicated generator 60 is shown in a radial cross-sectional view in which a rotor 100 coupled to a rotor shaft 102 has permanent magnets 104A-104N ("permanent magnets 104") disposed on a radial outside edge of rotor 100. Rotor shaft 102 may be mechanically coupled to LP shaft 58 via an accessory gearbox (or other mechanical coupling). When LP shaft 58 begins to rotate, a clutch or other mechanism within accessory gearbox may engage LP shaft 58 to rotor shaft 102, thereby rotating rotor shaft 102, rotor 100, and permanent magnets 104 within radial dedicated generator 60.

As further shown in the cross-sectional view, radial dedicated generator 60 includes stator teeth 106A-106Q ("stator teeth 106"). Stator teeth 106 are disposed around a circular body 108 of radial dedicated generator 60, forming a yoke or iron-back. As noted above, the yoke may extend along the full axial length of circular body 108 to provide rigidity and possibly allow for thermal pathways to expel excess heat generated by operation of radial dedicated generator 60.

Stator teeth 106 may include control windings 110A and 110B ("control windings 110", which are arranged in various positions around stator teeth 106 to produce a multi-phase AC voltage) and ignitor windings 112A and 112B ("ignitor windings 112," which are also arranged in various positions around stator teeth 106 to produce a multi-phase AC voltage). Via rotation of permanent magnets 104 (that produce a magnetic field), the multi-phase AC voltage for each of control windings 110 and ignitor windings 112 may be induced. Control windings 110 may provide the mutli-phase AC voltage via an electrical coupling to controller 64, while ignitor windings may provide the multi-phase AC voltage via the electrical coupling to ignitor 65.

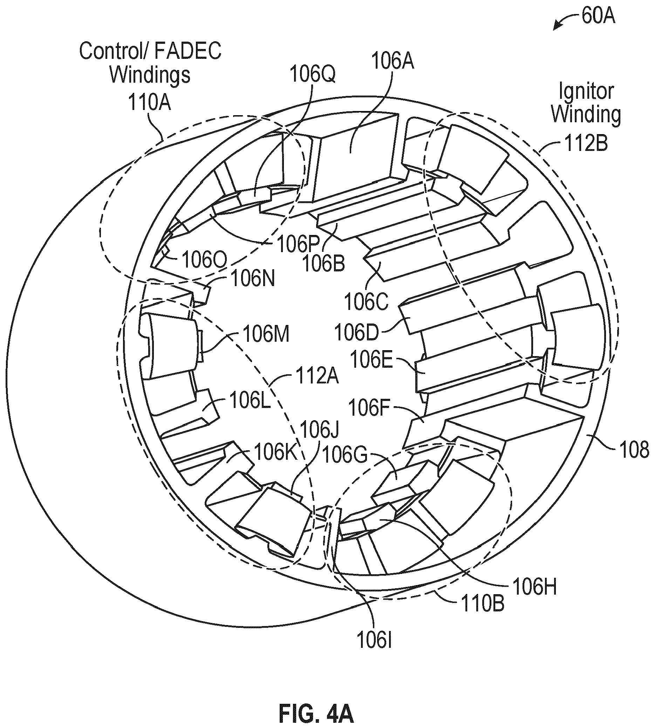

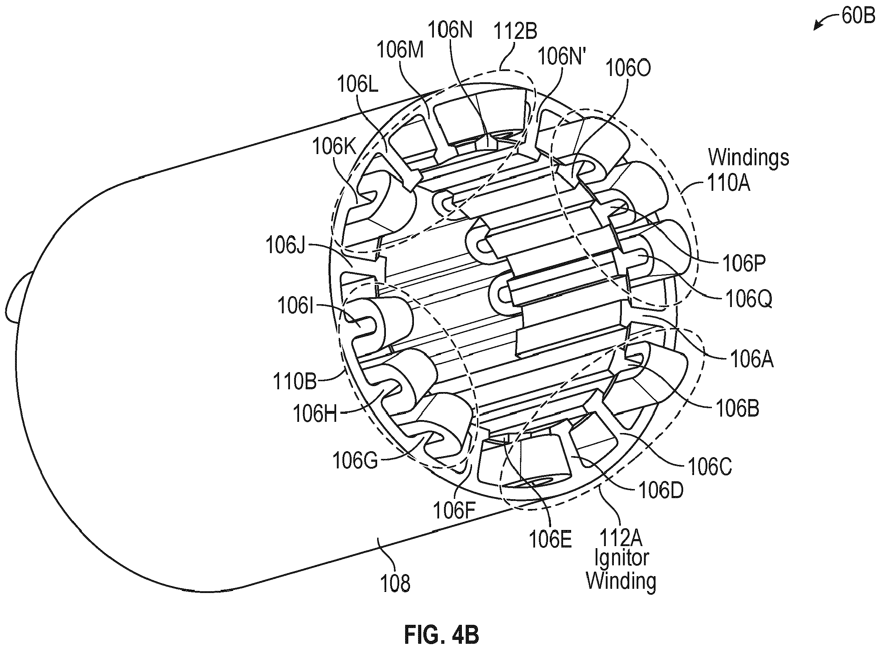

However, rather than utilize uniform, axial lengths for all of stator teeth 106, radial dedicated generator 60 may include subsets of stator teeth 106 that are of different axial lengths (where the term "subset" is not used in the strict mathematical sense to include zero or more and possibly all elements in a set, but to refer to one or more but less than all elements in the set). In the example of FIG. 3, a subset of stator teeth 106 supporting control windings 110 may have an axial length that is less than a subset of stator teeth 106 supporting ignitor windings 112, which is shown in greater detail with respect to the examples of FIGS. 4A and 4B.

FIGS. 4A and 4B are diagrams illustrating different arrangements of stator teeth of the radial dedicated generator of FIGS. 2A and 2B according to various aspects of the techniques described in this disclosure. In the example of FIG. 4A, a radial cross-sectional perspective view of an example of radial dedicated generator 60 is shown, where the particular example of radial dedicated generator 60 is denoted as radial dedicated generator 60A. Rotor 100, rotor shaft 102, and permanent magnets 104 are removed from the cross-sectional perspective view in order to expose stator teeth 106 in more detail. It should be understood however that radial dedicated generator 60A includes rotor 100, rotor shaft 102, and permanent magnets 104.

Stator teeth 106G, 106H, 1060, 106P, and 106Q form a first subset of stator teeth 106, which may be referred to collectively as "shortened stator teeth 106" as a result of extending axially along body 108 of radial dedicated generator 60A less than an entire axial length of body 108 (which may also be referred to as "frame 108") of radial dedicated generator 60A. Stator teeth 106A-106F and 106I-106N form a first subset of stator teeth 106, which may refer to collectively as "standard stator teeth 106" as a result of extending axially along the entire axial length of frame 108 of radial dedicated generator 60A.

Shortened stator teeth 106 may support control windings 110, while standard stator teeth 106 may support ignitor windings 112. The yoke (or, in other words, the iron-back) of shortened stator teeth 106 and standard stator teeth 106 may extend along the full axial length of frame 108 for the reasons noted above. Shortened stator teeth 106 may extend axially along frame 108 from a start of one side of frame 108 to less than the entire axial length of frame 108, where, in the example of FIG. 4A, shortened stator teeth 106 may extent from a backside (or, in other words, a base) of frame 108 to less than the entire axially length of frame 108. Starting shortened stator teeth 106 from one side (e.g., the base of frame 106 or a top of frame 106) may allow potentially improve manufacturing of radial dedicated generator 60A as it may be easier to wind shortened stator teeth 106.

Shortened stator teeth 106 are formed using a first lamination profile that differs from a lamination profile used to form one or more stator yokes that support shortened stator teeth 106. These lamination profiles are, when manufactured, joined together to form the stator stack, which may be preferred to post machining out which may damage the magnetic performance of the iron. In some instances, manufacturing of these shortened stator teeth 106 may occur via three-dimensional (3D) printing of the stator stack to achieve various shapes (such as the shapes of stator teeth 106A, 106F, 106I, and 106N discussed below in more detail).

Stator teeth 106A, 106F, 106I, and 106N may represent spacer stator teeth (and may be referred to collectively as "spacer stator teeth 106"). Spacer stator teeth 106 are between shortened stator teeth 106 and standard spacer teeth 106, and provided electrical separation between control windings 110 and ignitor windings 112. Spacer stator teeth 106 may include a first half that has a first half profile that extends axially for the axial length of the adjacent shortened stator teeth of shortened stator teeth 106 and a second half that has a second half profile that extend axially for the axial length of the adjacent standard stator teeth of standard stator teeth 106.

For example, spacer stator tooth 106A may include a first half profile that extends axially for the axial length of adjacent shortened stator tooth 106Q and a second half profile that extends axially for the axial length of adjacent standard stator tooth 106B. While shown as having half profiles of different lengths, spacer stator teeth 106 may have different profiles in which spacer stator teeth 106 may extend axially for the whole length of frame 108 (meaning, the axial length of standard stator teeth 106) or the shortened length of shortened stator teeth 106.

Referring next to the example of FIG. 4B, another example of radial distributed generator 60 is shown as radial distributed generator 60B. Radial distributed generator 60B may be similar to radial distributed generator 60A, except that shortened stator teeth 106 extend axially from the top of frame 108 rather than a base of frame 108 (and includes an extra stator tooth 106N' as another one of spacer stator teeth 106, where it should be understood that radial distributed generator 60 may include any number of stator teeth 106). While shown as extending from one side of frame 108 (e.g., the base or top of frame 108), shortened stator teeth 106 may be disposed anywhere within frame 108, such as centrally along the axial length of frame 108 or anywhere within frame 108 without starting from or ending at either side of frame 108.

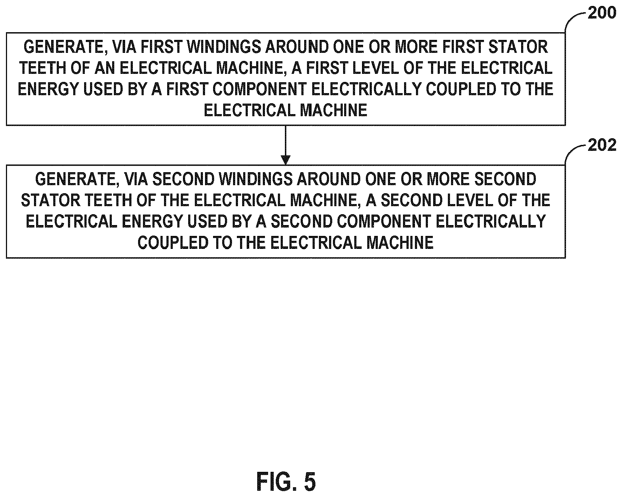

FIG. 5 is a flowchart illustrating example operation of the radial dedicated generator of FIGS. 2A and 2B in accordance with various aspects of the techniques described in this disclosure. As described above, radial dedicated generator 60 may represent an electrical machine electrically configured to generate electrical energy used by two or more components of gas-turbine engine 18A, such as controller 64 and ignitor 65. Radial dedicated generator 60 may include one or more rotors in which magnets are disposed along an outside radial edge of the rotor. Dedicated generator 60 is radial in that magnetic flux flows radially rather than axially. In axial generators the magnets are disposed on a face of the rotor as opposed to the outside radial edge of the rotor and magnetic flux flows axially.

Radial dedicated generator 60 includes one or more first stator teeth having a first axial length that support first windings configured to generate a first level of the electrical energy used by a first component (e.g., controller 64) of the two or more components. The first windings may include conductors (e.g., copper wires) forming coils that are wrapped or, in other words, wound around the first stator teeth. The first stator teeth are coupled to a body of radial dedicated generator 60 via respective yokes (which may also be referred to as back-irons). The yokes may extend an entire length of the body of radial dedicated generator 60 regardless of whether the first stator teeth extend the entire length of the body of radial dedicated generator 60 or span only a portion (meaning less than the entire length) of the body of radial dedicated generator 60. The yokes may extend an entire length of the body of radial dedicated generator 60 to preserve structural rigidity and/or maintain thermal conduction pathways.

Radial dedicated generator 60 may also include one or more second stator teeth having a second axial length that support second windings configured to generate a second level of the electrical energy used by a second component (e.g., ignitor 65) of the two or more components. The first axial length may be different than the second axial length, which results in the first and second windings producing different levels of electrical energy. For example, the first level of electrical energy is less than the second level of electrical energy when the first axial length of the first stator teeth is less than the second axial length of the second stator teeth. While the above example assumes the first axial length is less than the second axial length, the first axial length may be greater than the second axial length.

Radial dedicated generator 60 may, when actively operating, generate, via the first windings around the first stator teeth, the first level of the electrical energy used by controller 64 electrically coupled to radial dedicated generator 60 (200). Radial dedicated generator 60 may, when actively operating, generate, via the second windings around the second stator teeth, the second level of the electrical energy used by ignitor 65 electrically coupled to radial dedicated generator 60 (202). By reducing the axial length of one or more of the wound stator teeth of these outputs, closer power matching to the requirements may be achieved.

The following examples may illustrate one or more aspects of the disclosure:
Example 1. An electrical machine electrically configured to generate electrical energy used by two or more components of a gas-turbine engine, the electrical machine comprising: one or more first stator teeth having a first axial length that support first windings configured to generate a first level of the electrical energy used by a first component of the two or more components; and one or more second stator teeth having a second axial length that support second windings configured to generate a second level of the electrical energy used by a second component of the two or more components, the first axial length different than the second axial length.
Example 2. The electrical machine of example 1, further comprising a rotor on which one or more magnets are displaced, the rotor mechanically coupled to the gas-turbine engine such that the rotor rotates the one or more magnets adjacent to the one or more first stator teeth such that the first windings generate the first level of the electrical energy and the second stator teeth such that the second windings generate the second level of electrical energy.
Example 3. The electrical machine of any combination of examples 1 and 2, wherein the one or more first stator teeth extend axially along the electrical machine for less than an entire axial length of a frame of the electrical machine, and wherein the one or more second stator teeth extend axially along the entire axial length of the frame of the electrical machine.
Example 4. The electrical machine of example 3, wherein one or more first stator yokes that support the first stator teeth extend axially along the entire axial length of the frame of the electrical machine.
Example 5. The electrical machine of example 3, wherein the one or more first stator teeth extend axially along the electrical machine from a start of one side of the frame to less than the entire axial length of the frame.
Example 6. The electrical machine of example 3, wherein the one or more first stator teeth extend axially along the electrical machine less than the entire axial length of the frame without starting from or ending at either side of the frame.
Example 7. The electrical machine of example 3, wherein the one or more first stator teeth extend axially along the electrical machine centrally for less than the entire axial length of the frame of the electrical machine.
Example 8. The electrical machine of any combination of examples 1-7, wherein the one or more first stator teeth are formed using a first lamination profile that differs from the lamentation profile used to form one or more stator yokes that support the one or more first stator teeth.
Example 9. The electrical machine of any combination of examples 1-8, wherein the electrical machine includes at least one spacer tooth between at least one first stator tooth of the one or more first stator teeth and at least one second stator tooth of the one or more second stator teeth.
Example 10. The electrical machine of example 9, wherein at least one spacer tooth has a first half profile that extends axially for the first axial length of at least one first stator tooth and a second half profile that extends axially for the second axial length of the at least one second stator tooth.
Example 11. The electrical machine of any combination of examples 1-10, wherein the first component of the two or more components includes an engine controller for the gas turbine engine, and wherein the second component of the two or more components includes one of an ignitor for the gas turbine engine or a speed reference winding.
Example 12. The electrical machine of any combination of examples 1-11, wherein the electrical machine is a multi-phase alternating current generator.
Example 13. A method comprising: generating, via first windings around one or more first stator teeth of an electrical machine, a first level of the electrical energy used by a first component electrically coupled to the electrical machine, the one or more first stator teeth having a first axial length; and generating, via second windings around one or more second stator teeth of the electrical machine, a second level of the electrical energy used by a second component electrically coupled to the electrical machine, the one or more second stator teeth having a second axial length different than the first axial length of the one or more first stator teeth.
Example 14. The method of example 13, wherein the electrical machine comprises a rotor on which one or more magnets are displaced, the rotor mechanically coupled to the gas-turbine engine such that the rotor rotates the one or more magnets adjacent to the one or more first stator teeth such that the first windings generate the first level of the electrical energy and the second stator teeth such that the second windings generate the second level of electrical energy.
Example 15. The method of any combination of examples 13 and 14, wherein the one or more first stator teeth extend axially along the electrical machine for less than an entire axial length of a frame of the electrical machine, and wherein the one or more second stator teeth extend axially along the entire axial length of the frame of the electrical machine.
Example 16. The method of example 15, wherein one or more first stator yokes that support the first stator teeth extend axially along the entire axial length of the frame of the electrical machine.
Example 17. The method of example 15, wherein the one or more first stator teeth extend axially along the electrical machine from a start of one side of the frame to less than the entire axial length of the frame.
Example 18. The method of example 15, wherein the one or more first stator teeth extend axially along the electrical machine less than the entire axial length of the frame without starting from or ending at either side of the frame.
Example 19. The method of example 15, wherein the one or more first stator teeth extend axially along the electrical machine centrally for less than the entire axial length of the frame of the electrical machine.
Example 20. A gas-turbine engine system comprising: a gas turbine engine that includes: a low pressure spool assembly configured to rotate a low pressure shaft; and a high pressure spool assembly mechanically coupled to the low pressure spool assembly; a radial dedicated generator; an assembly gearbox configured to mechanically couple the low pressure shaft to the radial dedicated generator; an engine control system configured to control the gas turbine engine; and an ignition system configured to ignite combustion within the high-pressure spool assembly, wherein the radial dedicated generator comprises: one or more first stator teeth having a first axial length that support first windings configured to generate a first level of the electrical energy used by the engine control system; and one or more second stator teeth having a second axial length that support second windings configured to generate a second level of the electrical energy used by the ignition system, the first axial length different than the second axial length.

Various examples have been described. These and other examples are within the scope of the following examples and claims.

## Claims

1. A method comprising:
generating, via first windings around one or more first stator teeth of an electrical machine, a first level of the electrical energy used by a first component electrically coupled to the electrical machine, the one or more first stator teeth having a first axial length; and
generating, via second windings around one or more second stator teeth of the electrical machine, a second level of the electrical energy used by a second component electrically coupled to the electrical machine, the one or more second stator teeth having a second axial length different than the first axial length of the one or more first stator teeth.

2. The method of claim 1, wherein the electrical machine comprises a rotor on which one or more magnets are displaced, the rotor mechanically coupled to the gas-turbine engine such that the rotor rotates the one or more magnets adjacent to the one or more first stator teeth such that the first windings generate the first level of the electrical energy and the second stator teeth such that the second windings generate the second level of electrical energy.

3. The method of any of claims 1 and 2,
wherein the one or more first stator teeth extend axially along the electrical machine for less than an entire axial length of a frame of the electrical machine, and
wherein the one or more second stator teeth extend axially along the entire axial length of the frame of the electrical machine.

4. The method of claim 3, wherein one or more first stator yokes that support the first stator teeth extend axially along the entire axial length of the frame of the electrical machine.

5. The method of any of claims 3 and 4, wherein the one or more first stator teeth extend axially along the electrical machine from a start of one side of the frame to less than the entire axial length of the frame.

6. The method of any of claims 3 and 4, wherein the one or more first stator teeth extend axially along the electrical machine less than the entire axial length of the frame without starting from or ending at either side of the frame.

7. The method of any of claims 3 and 4, wherein the one or more first stator teeth extend axially along the electrical machine centrally for less than the entire axial length of the frame of the electrical machine.

8. The method of any of claims 1-7, wherein the one or more first stator teeth are formed using a first lamination profile that differs from the lamentation profile used to form one or more stator yokes that support the one or more first stator teeth.

9. The method of any of claims 1-8, wherein the electrical machine includes at least one spacer tooth between at least one first stator tooth of the one or more first stator teeth and at least one second stator tooth of the one or more second stator teeth.

10. The method of claim 9, wherein at least one spacer tooth has a first half profile that extends axially for the first axial length of at least one first stator tooth and a second half profile that extends axially for the second axial length of the at least one second stator tooth.

11. The method of any of claims 1-10,
wherein the first component of the two or more components includes an engine controller for the gas turbine engine, and
wherein the second component of the two or more components includes one of an ignitor for the gas turbine engine or a speed reference winding.

12. The method of any of claims 1-11, wherein the electrical machine is a multi-phase alternating current generator.

13. An electrical machine electrically configured to generate electrical energy used by two or more components of a gas-turbine engine, the electrical machine comprising:
one or more first stator teeth having a first axial length that support first windings configured to generate a first level of the electrical energy used by a first component of the two or more components; and
one or more second stator teeth having a second axial length that support second windings configured to generate a second level of the electrical energy used by a second component of the two or more components, the first axial length different than the second axial length.

14. The electrical machine of claim 13, wherein the electrical machine is configured to perform the method recited by any of claims 2-12.

15. A gas-turbine engine system comprising:
a gas turbine engine that includes:
a low pressure spool assembly configured to rotate a low pressure shaft; and
a high pressure spool assembly mechanically coupled to the low pressure spool assembly;
a radial dedicated generator;
an assembly gearbox configured to mechanically couple the low pressure shaft to the radial dedicated generator;
an engine control system configured to control the gas turbine engine; and
an ignition system configured to ignite combustion within the high-pressure spool assembly,
wherein the radial dedicated generator comprises:
one or more first stator teeth having a first axial length that support first windings configured to generate a first level of the electrical energy used by the engine control system; and
one or more second stator teeth having a second axial length that support second windings configured to generate a second level of the electrical energy used by the ignition system, the first axial length different than the second axial length.

16. The gas-turbine engine of claim 15, wherein the gas-turbine engine is configured to perform the method recited by any of claims 2-12.
